# EUROPÄISCHE PATENTSCHRIFT

(11) **EP 2 293 647 B1**
(45) Veröffentlichungstag und Bekanntmachung des Hinweises auf die Patenterteilung: **03.06.2020**
(21) Anmeldenummer: 10008633.9
(22) Anmeldetag: 19.08.2010
(51) Int. Cl.: H05B 3/34, B62D 1/06

(54) **Verformbares Heizelement**
Reformable heating element
Elément de chauffage déformable

(30) Priorität: 08.09.2009 DE 202009012162 U
(43) Veröffentlichungstag der Anmeldung: 09.03.2011
(73) Patentinhaber: I.G. Bauerhin GmbH, 63584 Gründau (DE)
(72) Erfinder: Letzas, Volker, 64839 Münster (DE); Debes, Sven, 63776 Mömbris (DE)
(74) Vertreter: Grimm, Ekkehard

(56) Entgegenhaltungen:
- EP-A1- 2 048 058
- DE-A1-102006 004 145
- US-A1- 2002 008 097
- US-A1- 2003 218 004
- US-B1- 6 392 195

## Beschreibung

Die vorliegende Erfindung betrifft ein verformbares Heizelement gemäß dem Oberbegriff des Anspruchs 1.

### Stand der Technik

Um Lenkräder zu beheizen, sind Heizelemente erforderlich, die sich der Querschnittsform des Lenkradkranzes anpassen. Bekannte Heizelemente für Lenkräder bestehen aus einem flächigen Grundmaterial, das auf seiner einen Seite metallische Heizleiter aufweist. Auch sind Lenkradheizungen bekannt, bei denen die Heizelemente in Schaummaterial oder in thermoplastische Kunststoffe eingebettet sind. Weiterhin sind Heizelemente aus Textillagen und/oder Schaumstoffmaterialien, zwischen denen der Heizleiter eingefügt ist, bekannt.

Die DE 296 16 918 U1 beschreibt ein Lenkrad mit integrierter Lenkradheizung. Bei dieser Lenkradheizung wird der Heizleiter in einen thermoplastischen Kunststoff eingeschmolzen. Der Einschmelzvorgang tritt auf, nachdem eine Spannung an den Heizleiter angelegt worden ist. Bei diesem Vorgang dringt der Heizleiter so weit in den thermoplastischen Kunststoff ein, dass der Heizleiter bündig auf der Außenseite mit dem thermoplastischen Kunststoff abschließt. Durch diese Einbettung des Heizleiters in den thermoplastischen Kunststoff soll erreicht werden, dass sich der Heizdraht nicht auf der Außenseite des Außenbezugs abzeichnet und auch nicht beim Halten des Lenkrads ertastet werden kann.

Die EP 0 832 806 A1 beschreibt ein Lenkrad mit einer integrierten Lenkradheizung. Hierzu umfasst der Lenkradkranz des Lenkrads unter seinem Außenbezug eine Schicht aus thermoplastischem Kunststoff, in die der Heizdraht eingeschmolzen ist. Der Heizdraht kann hierbei bündig mit der Schicht aus thermoplastischem Kunststoff auf der Außenseite abschließen oder er kann vollständig mit thermoplastischem Kunststoff umspritzt sein.

Die DE 10 2006 004 145 A1 betrifft ein elektrisches Heizelement. Das Heizelement umfasst einen Träger, bei dem es sich um einen beliebigen Werkstoff handeln kann, beispielsweise um einen textilen Stoff, ein Vlies, eine Folie, ein Gewebe, ein Gewirke, gebildet aus synthetischem oder natürlichem Fasermaterial. Der Träger ist zumindest lokal mit zumindest zeitweise klebfähigem Material versehen, dessen Klebrigkeit gezielt aktivierbar ist. Der Heizleiter wird an dem Träger vernäht.

Die US 6 392 195 B1 beschreibt ein beheizbares Lenkrad, das einen Lederbezug mit einer darunter angeordneten Schaumschicht und einem darunter angeordneten Heizelement aufweist. Das Heizelement besteht aus einem dünnen Webstoff, der aus mit Silber beschichtetem Nylon gefertigt ist. Dieses Heizelement ist direkt auf dem Substrat des Lenkrads angeordnet. Das Substrat umgibt den tragenden Kern des Lenkradkranzes (hergestellt aus Metall), welches aus einem geschäumten Material besteht. Somit ist bei diesem Lenkrad der Heizleiter integraler Bestandteil des Heizelements. Weiterhin ist bei diesem Lenkrad über dem Heizelement die Schaumschicht angeordnet, die das Heizelement abdeckt und dadurch nicht durch den Bezug hindurch sichtbar ist.

Die US 2003/218004 A1 beschreibt ein Heizelement für ein Lenkrad. Dieses Lenkrad besteht im Querschnitt gesehen aus einem Kern mit einem Metallkern und einer Abdeckschicht aus festem Urethan oder einem ähnlichen Material. Das Heizelement umfasst einen Heizdraht, der zwischen einer Schutzschicht, die aus einem Webstoff oder einem Vlies gebildet ist, und einem Basismaterial, das aus einem Vlies oder einem geschäumten Harz gebildet ist, angeordnet ist, wobei die Schutzschicht und das Basismaterial mit dem Heizdraht dazwischen mit Klebemittel verklebt sind In einer Ausführungsform können sowohl das Basismaterial als auch die Schutzschicht aus einem Material, nämlich einem Vlies, gebildet sein und der Heizdraht ist zwischen diesen beiden Schichten aus gleichem Material eingeklebt.

Die US 2002/008097 A1 beschreibt ein beheiztes Lenkrad, das, wie die Figur 2 zeigt, einen inneren Kern, ein Abdeckmaterial, eine darauf angeordnete Heizvorrichtung, eine die Heizvorrichtung abdeckende Schicht sowie einen äußeren Mantel umfasst. Die Schicht, die die Heizvorrichtung auf deren Außenseite bedeckt, kann aus einem Material mit niedriger Dichte, beispielsweise einem Polyesterschaum, bestehen. Der äußere Mantel besteht aus zwei Teilen, die aus Holz gefertigt sind und den inneren Aufbau des Lenkrads in Form einer Schale umgeben.

Die EP 2 048 058 A1 beschreibt ein beheizbares Lenkrad, das einen Aufbau mit einem Grundkörper, einer darauf angeordneten Isolierschicht und einem Heizleiter zwischen dieser Isolierschicht und dem äußeren Überzugsmaterial aufweist. Nach der Aufgabe, die angegeben ist, soll der in dem Lenkrad enthaltene Heizleiter gegenüber mechanischen Belastungen und gegenüber der Einwirkung von Schweiß bestmöglich geschützt werden. Um dies zu erreichen wird ein Heizelement eingesetzt, das einen mit Polyamid beschichteten Kupferdraht umfasst, wobei der Kupferdraht unmittelbar mit einer Zwischenschicht aus Polyurethan versehen ist, auf der die Polyamidbeschichtung aufgebracht ist. Die Isolierschicht zwischen Heizleiter und Grundkörper soll dazu dienen, den Heizleiter gegenüber mechanischen Belastungen und gegenüber Einwirkungen von Schweiß bestmöglich zu schützen. Die Isolier- bzw. Trägerschicht kann aus Schaumstoff, Vlies oder Filz bestehen.

Oben genannte Heizvorrichtungen, bei denen der Heizleiter aus fertigungstechnischen Gründen aufgeheizt wird, um entweder einen Kleber zu aktivieren oder ihn in einen Schaumkörper einzuschmelzen, ist dahingehend nachteilig, dass die Heizleiter bereits während der Herstellung sehr stark durch das Aufheizen auf sehr hohe Temperaturen in sehr kurzer Zeit, um die Materialien zu aktivieren und um den Fertigungsvorgang in sehr kurzen Zykluszeiten vornehmen zu können, beansprucht werden. Des Weiteren kommt es vor, dass sich der Heizleiter auf dem Lenkradbezug abzeichnet.

Der vorliegenden Erfindung liegt nun die Aufgabe zugrunde, ein verformbares Heizelement zu schaffen, das kostengünstig herstellbar ist und bei dem sich der Heizleiter im eingebauten Zustand der Heizung nicht im Bezug abzeichnet und bei dem der Heizleiter während des Herstellprozesses thermisch nicht belastet werden muss.

Die vorliegende Aufgabe wird durch ein verformbares Heizelement mit den Merkmalen des Anspruchs 1 gelöst. Bevorzugte Ausführungsformen sind in den abhängigen Ansprüchen angegeben. Das verformbare Heizelement, insbesondere ein solches für Lenkradheizungen, dient zum Anbringen an einen Trägerkörper und weist mindestens einen Heizleiter, der auf einem flächigen Grundmaterial auf dessen einen Seite, als Vorderseiten-Schicht bezeichnet, verlegt und befestigt ist, auf. Das Grundmaterial ist in eine Vorderseiten-Schicht und eine Rückseiten-Schicht, die sich an die Vorderseiten-Schicht auf der dem Heizleiter gegenüberliegenden Seite anschließt, unterteilt, wobei die Vorderseiten-Schicht, auf der der Heizleiter verlegt und befestigt ist, eine geringere Stauchhärte und/oder Volumendichte aufweist als der Bereich der Rückseiten-Schicht.

Die Vorderseiten-Schicht nimmt gegenüber der Rückseiten-Schicht bei gleichem Raumgewicht ein 50 bis 100 % größeres Volumen ein. Gerade mit einem solchen Grundmaterial zeichnet sich ein darauf aufgelegter Heizleiter im eingebauten Zustand des Heizelements nicht unter dem darüberliegenden Bezug ab.

Der besondere Vorteil dieses Heizelements liegt darin, dass die Struktur des Grundmaterials in zwei unterschiedliche Schichten unterteilt ist, nämlich eine solche, die die Vorderseite bildet, das bedeutet diejenige, auf der der Heizleiter aufgelegt bzw. eingebettet wird, und eine solche, die die Rückseite des Grundmaterials bildet.

Die Rückseite des Grundmaterials besitzt bei dem erfindungsgemäßen, verformbaren Heizelement eine Stauchhärte und/oder Volumendichte, die höher ist als diejenige der Schicht des Grundmaterials, die die Vorderseite bildet. Die Rückseiten-Schicht ist dadurch geeignet, die Verbindungsfläche und damit die Klebefläche mit dem Lenkradkörper oder dem Bezug zu bilden, je nachdem, ob der Heizleiter, der sich im Bereich der Vorderseiten-Schicht befindet, näher zu dem Lenkradkörper oder näher zu dem Bezug angeordnet werden soll. Durch die hohe Stauchhärte und/oder Volumendichte kann sichergestellt werden, dass das Klebemittel, mit dem das verformbare Heizelement an dem Trägerkörper befestigt ist, nur gering, wenn überhaupt, in diese Schicht eindringt. Die Vorderseiten-Schicht ist dagegen so aufgelockert, dass sich ein Heizleiter, der darauf aufgebracht wird, in dieses aufgelockerte Material einlegen kann. Dadurch ist gewährleistet, dass sich ein Heizleiter nicht in dem Bezug-Material des Lenkrads abzeichnet. Auch ist die Möglichkeit gegeben, durch Variation der Stauchhärte und/oder der Volumendichte der Vorderseiten-Schicht gegenüber der Rückseiten-Schicht die Eigenschaften der jeweiligen Schicht an die Erfordernisse anzupassen.

Das erfindungsgemäße Heizelement ist aufgrund seines Aufbaus auch durch seine gute Verformbarkeit gekennzeichnet, so dass es sich auch an stark gekrümmte Flächen, wie beispielsweise eines Lenkradkranzes, anlegen lässt.

Soweit die Stauchhärte angesprochen ist, so ist diese definiert als der Druck, der aufgebracht werden muss, um einen Schaum-Rohblock um 40% einzudrücken. Je niedriger die Stauchhärte, desto weicher das Material.

Falls Heizleiter verwendet werden, die einen stärkeren Leiterdurchmesser aufweisen, sollte die Stauchhärte und/oder Volumendichte der Vorderseiten-Schicht sehr gering gehalten werden, um den Leiterquerschnitt des Heizleiters in dieser Materialschicht einzubetten. Bei einer niedrigen Stauchhärte und/oder Volumendichte der Vorderseiten-Schicht zeigt sich, dass sich das lockere Material dann, wenn der Heizleiter auf die Schicht aufgelegt ist und in die Schicht eingedrückt wird, über den Heizleiter legt und diesen nicht nur einbettet, sondern auch abdeckt.

In einer bevorzugten Ausführungsform wird das gesamte Grundmaterial, das bedeutet sowohl das Material der Vorderseiten-Schicht als auch das Material der Rückseiten-Schicht, aus derselben Materialart gebildet. Dadurch kann der Fertigungsprozess des Heizelements stark vereinfacht werden.

Das Grundmaterial sollte ein Raumgewicht aufweisen, das von 50 bis 200 kg/m³, vorzugsweise von 50 bis 100 kg/m³, reicht. In diesen Bereichen werden die Vorderseiten-Schicht und die Rückseiten-Schicht eingestellt.

Das Grundmaterial weist dabei eine Dicke auf, die im Bereich von 1,0 mm und 3 mm liegt, wobei eine Materialdicke zwischen 1 mm und 2 mm zu bevorzugen ist.

Bei einer Dicke von 1 mm bis 2 mm sollte das Grundmaterial ein Flächengewicht von 50 bis 150 g/m² aufweisen.

Als besonders bevorzugtes Material wird das Grundmaterial, zumindest auf der Vorderseiten-Schicht, aus einem Nadelvlies gebildet. Ebenso geeignet ist Zellkautschuk oder Halbwollwatte. Nadelvlies sollte dann verwendet werden, wenn der Lenkradbezug grob strukturiert ist (kein Glattleder) evtl. kann im Lederbezug noch eine Kaschierung in Form von Zellkautschuk vorhanden sein. Zellkautschuk ist sowohl für Glattleder, als auch für grob strukturiertes Leder geeignet. Durch die Lederspannung bei Beledern des Lenkrades drückt sich der Heizleiter in den Zellkautschuk hinein und der Heizleiter zeichnet sich somit nicht auf dem Lederbezug ab. Halbwollwatte sollte dann herangezogen werden, wenn der Heizleiter besonders dick im Durchmesser (0,12 mm - 0,15 mm) ist oder von der Steifigkeit zu starke Aufstellungskraft besitzt. Mit Steifigkeit ist die Verseilung des Heizleiters gemeint.

Gleiches gilt dann, wenn das Grundmaterial aus einem Material mit elastischen Fasern gebildet ist. Ein Material aus elastischen Fasern, beispielsweise aus Polyester Fasern, sollte dann verwendet werden, wenn eine Dehnbarkeit der Lenkradheizung zwischen 8-15 Prozent (%) vom Ursprung verlangt wird.

Für eine definierte Einstellung der Stauchhärte und/oder Volumendichte zwischen der Vorderseiten-Schicht und der Rückseiten-Schicht des Grundmaterials kann es von Vorteil sein, dass diese beiden Schichten aus mindestens zwei aufeinander liegenden Matten, bevorzugt Nadelvlies-Matten, gebildet werden.

Die gegenüber der Vorderseiten-Schicht verfestigte Rückseiten-Schicht des Grundmaterials kann aus einem dünnen Gewirke gebildet sein. Ein solches Gewirke bildet eine Unterlage für die Vorderseiten-Schicht.

Damit sich der Heizleiter optimal in die Vorderseiten-Schicht des Grundmaterials einlegen kann, ist es von Vorteil, wenn ein Heizleiter verwendet wird, der aus mehreren Litzen aufgebaut ist. Die Litzen des Heizleiters passen sich, wenn der Heizleiter in die Oberseitenschicht eingedrückt wird, der Struktur des Grundmaterials an. Heizleiter, die 4 bis 10 Litzen aufweisen, wobei jede Litze einen Durchmesser von 0,06 bis 0,15 mm aufweist, werden bevorzugt eingesetzt.

Das Grundmaterial kann so aufgebaut sein, dass die Stauchhärte von der Vorderseite zu der Rückseite monoton steigend ist. Besonders bevorzugt sollte sich die Stauchhärte von der Vorderseite zur Rückseite linear oder quadratisch ansteigend verhalten.

Die Heizleiter können aus mehreren Filamenten bestehen, wobei die einzelnen Filamente mit einer Lackschicht überzogen sind.

Weitere Einzelheiten und Merkmale der Erfindung ergeben sich aus der nachfolgenden Beschreibung eines Ausführungsbeispiels anhand der Zeichnung. In der Zeichnung zeigt
- Figur 1: in einer schematischen Darstellung die Draufsicht eines Lenkrad mit Heizelement,
- Figur 2: schematisch den Aufbau des Lenkrads nach Figur 1 im Querschnitt von dem Lenkradkörper zu dem Lenkrad hin, wobei der Heizleiter zu dem Bezug hinweist,
- Figur 3: einen weiteren schematisch Aufbau des Lenkrads nach Figur 1 im Querschnitt von dem Lenkradkörper zu dem Lenkrad hin, wobei der Heizleiter zu dem Lenkradkörper hinweist, und
- Figur 4: schematisch den Aufbau des erfindungsgemäßen Heizelements.

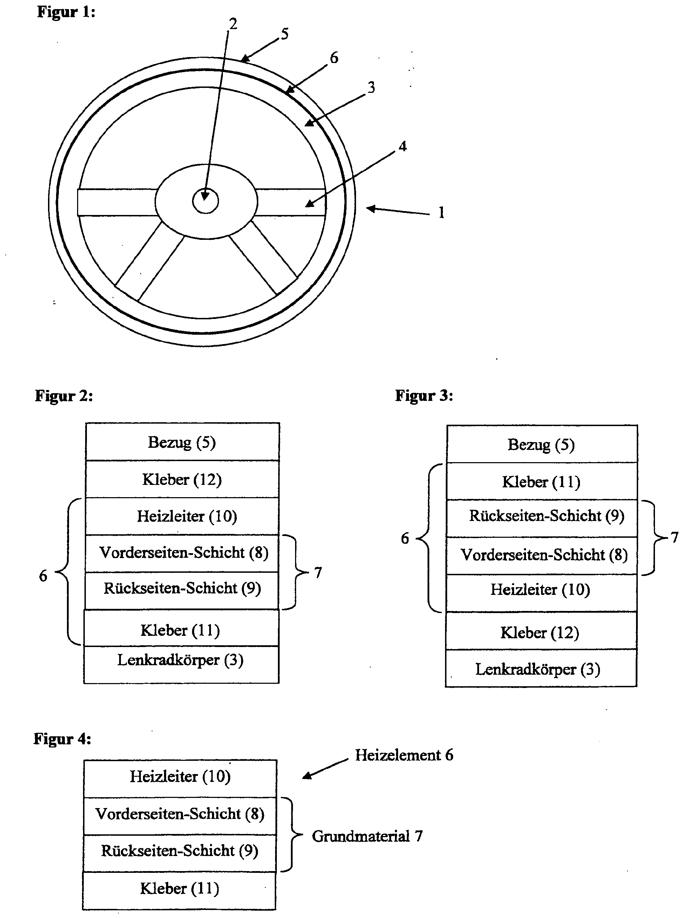

Das Lenkrad, wie es in Figur 1 in der Draufsicht gezeigt ist, und das allgemein mit dem Bezugszeichen 1 bezeichnet ist, umfasst eine Lenkradnabe 2 sowie einen Lenkradkörper 3, auch als Lenkradkranz bezeichnet, der an der Lenkradnabe 2 mittels Speichen 4 gehalten ist.

Der Lenkradkörper 3 ist mit einem Lenkradbezug 5 überzogen. Unterhalb des Lenkradbezugs 5 befindet sich ein Heizelement, um den Lenkradkranz 3 zu beheizen. Das Heizelement ist mit dem Bezugszeichen 6 bezeichnet.

Der Lenkradbezug 5 wird bei solchen elektrisch beheizten Lenkrädern üblicherweise aus Leder gefertigt, das sich durch seine materialspezifischen Eigenschaften dann, wenn es erwärmt wird, auszeichnet.

Der Aufbau des Lenkradkranzes ist schematisch in zwei Ausführungsvarianten in den Figuren 2 und 3 dargestellt, während das erfindungsgemäße verformbare Heizelement 6 schematisch in der Figur 4 gezeigt ist.

Das Heizelement 6, wie es in Figur 4 schematisch dargestellt ist, umfasst ein Grundmaterial 7, das in eine Vorderseiten-Schicht 8 und eine Rückseiten-Schicht 9 unterteilt ist. Auf die Vorderseiten-Schicht 8 ist ein Heizleiter 10 aufgelegt.

Die Vorderseiten-Schicht 8 und die Rückseiten-Schicht 9 unterscheiden sich durch ihre jeweilige Stauchhärte und/oder Volumendichte. Die Rückseiten-Schicht 9 besitzt eine Stauchhärte und/oder Volumendichte, die höher als diejenige der Vorderseiten-Schicht 8 ist. Durch die geringe Stauchhärte und/oder Volumendichte der Vorderseiten-Schicht 8 ist gewährleistet, dass sich der Heizleiter 10 in die Schicht, üblicherweise eine Faserschicht, einlegt, gerade dann, wenn das Heizelement 6 eingebaut ist, beispielsweise als Lenkradheizung in ein Lenkrad, wie dies in zwei Varianten in den schematischen Darstellungen der Figuren 2 und 3 dargestellt ist.

Die Rückseiten-Schicht 9 bildet durch ihre höhere Stauchhärte und/oder Volumendichte eine stabile Unterlage. Je nachdem, ob das Heizelement nahe zu dem Bezug oder in größerem Abstand zu dem Bezug angeordnet werden soll, wird das Heizelement 6, wie es in Figur 4 dargestellt ist, mit dem Grundmaterial 7 und dem auf der Vorderseiten-Schicht 8 aufgelegten bzw. eingebetteten Heizleiter 10, auf den Lenkradkranz 3 in entsprechender Orientierung aufgebracht.

Die Figur 2 zeigt eine Ausführungsform bei der sich der Heizleiter 10 unmittelbar unterhalb des Bezugs 5 des Lenkradkranzes 3 befindet. Der Bezug 5 ist auf dem Heizelement 6, das bedeutet somit auf der Vorderseiten-Schicht 8 des Grundmaterials 7, mittels Kleber 12 verklebt. Die Rückseiten-Schicht 9 des Grundmaterials 7 ist auf dem Lenkradkörper 3 mittels Kleber 11 verklebt.

Die Rückseiten-Schicht 9, mit der der Kleber in Kontakt steht, gewährleistet aufgrund der geringen Stauchhärte bzw. Volumendichte, dass der Kleber 11 nur gering in diese Rückseiten-Schicht 9 eindringt. Dadurch wird das Grundmaterial 7 nicht wesentlich durch Kleber verfestigt.

Der Heizleiter 10 kann auf die Vorderseiten-Schicht 8 des Grundmaterials 7 aufgelegt und zusätzlich durch geeignete Befestigungsmittel befestigt werden.

Bevorzugt besteht der Heizleiter 10 aus einer Vielzahl von Litzen, so dass er auf das Grundmaterial 7 in geeignetem Muster verlegt werden kann und sich darüber hinaus in das Material der Vorderseiten-Schicht 8 einlegt. Das Einlegen des Heizleiters 10 in das Material der Vorderseiten-Schicht 8 so, dass sich der Heizleiter 10 nicht durch den darauf aufgebrachten Bezug abzeichnet, wird insbesondere dann unterstützt, wenn das Material der Vorderseiten-Schicht 8 sehr stark aufgelockert ist. Bei einem Fasermaterial, aus dem die Vorderseiten-Schicht 8 bevorzugt gebildet wird, werden die Fasern so aufgelockert, dass sich ein Teil der Fasern um den Heizleiter 10 herum legt oder diesen sogar abdeckt.

Der Bezug 5, der das Heizelement 6 abdeckt, wird durch einen Kleber 12 befestigt, der vorzugsweise auf die Klebefläche des Bezugs 5 aufgebracht wird, bevor der Bezug 5 auf das Heizelement 6 aufgebracht wird. Dieser Kleber 12 dringt erst dann in das Grundmaterial 7 bzw. die Vorderseiten-Schicht 8 ein, wenn der Bezug 5 an das Heizelement 6 angedrückt ist.

Die Figur 3 zeigt eine Ausführungsvariante, bei der das Heizelement 6 gegenüber der Ausführungsform der Figur 2 gedreht ist, so dass sich nun die Vorderseiten-Schicht 8 des Grundmaterials 7, auf die der Heizleiter 10 aufgelegt oder eingebettet ist, zu dem Lenkradkörper 3 hin orientiert ist. Dadurch befindet sich der Heizleiter 10 nicht unmittelbar unterhalb des Bezugs 5.

Das Heizelement 6 mit dem Grundmaterial 7 und dem darauf aufgelegten Heizleiter 10 kann bereits mit einer Schicht aus dem Kleber 11 versehen werden, so dass der Kleber 11 nicht gesondert auf den Lenkradkörper 3 aufgebracht werden muss. Dies hat insbesondere fertigungstechnische Vorteile, als auch Vorteile für den Aufbau.

Durch Verwendung eines flüssigen Klebers 12, der auf die Vorderseiten-Schicht 8 des Grundmaterials 7aufgebracht wird, bildet sich ein Verbundwerkstoff, der als Eigenschaft zusätzlich zur Befestigung des Bezuges 5 auch noch dauerhaft sicherstellt, dass sich der Heizdraht 10 auch nach längerem Gebrauch nicht an der Oberfläche des Bezuges 5 abzeichnet.

Verschiedene Kleber können eingesetzt werden, insbesondere Flüssigkleber auf Basis leichtflüchtiger Lösemittel; zu bevorzugen sind auf Wasser basierende Kleber.

Wenn der Verbundwerkstoff unter Verwendung eines thermisch härtbaren oder UVhärtbaren Klebstoffs gebildet wird, wird dennoch eine weitere Schicht mit Kleber 12 aufgebracht. Dieser Kleber 12 kann vor Aufbringen des Bezugs auf das bereits am Lenkradkörper aufgebrachte verformbare Heizelement und/oder auf den Bezug aufgebracht werden.

## Patentansprüche

1. Verformbares Heizelement mit mindestens einem Heizleiter (10), der auf einem flächigen Grundmaterial (7), auf dessen einen Seite, als Vorderseiten-Schicht (8) bezeichnet, verlegt und befestigt ist, wobei das Grundmaterial (7) in eine Vorderseiten-Schicht (8) und eine Rückseiten-Schicht (9), die sich an die Vorderseiten-Schicht (8) auf der dem Heizleiter (10) gegenüberliegenden Seite anschließt, unterteilt ist, wobei die Vorderseiten-Schicht (8), auf der der Heizleiter (10) verlegt und befestigt ist, eine geringere Stauchhärte und/oder Volumendichte aufweist als der Bereich der Rückseiten-Schicht (9) **dadurch gekennzeichnet, dass** und die Vorderseiten-Schicht (8) gegenüber der Rückseiten-Schicht (9) bei gleichem Raumgewicht ein 50 bis 100 % größeres Volumen einnimmt.

2. Verformbares Heizelement, nach Anspruch 1, **dadurch gekennzeichnet, dass** das gesamte Grundmaterial (7) aus einer Materialart gebildet ist.

3. Verformbares Heizelement nach Anspruch 1 oder 2, **dadurch gekennzeichnet, dass** das Grundmaterial (7) ein Raumgewicht aufweist, das von 50 bis 200 kg/m³, vorzugsweise von 50 bis 100 kg/m³, reicht.

4. Verformbares Heizelement nach Anspruch 1 oder 2, **dadurch gekennzeichnet, dass** das Grundmaterial (7) aus einer Materialschicht gebildet ist, die bei einer Dicke von 1 bis 2 mm ein Flächengewicht von 50 bis 150 g/m² aufweist.

5. Verformbares Heizelement nach einem der Ansprüche 1 bis 4, **dadurch gekennzeichnet, dass** das Grundmaterial (7) zumindest auf der Vorderseiten-Schicht (8) aus einem Nadelvlies gebildet ist.

6. Verformbares Heizelement nach einem der Ansprüche 1 bis 4, **dadurch gekennzeichnet, dass** das Grundmaterial (7) zumindest auf der Vorderseiten-Schicht (8) aus Zellstoffwatte gebildet ist.

7. Verformbares Heizelement nach einem der Ansprüche 1 bis 4, **dadurch gekennzeichnet, dass** das Grundmaterial (7) aus einem Material mit elastischen Fasern gebildet ist.

8. Verformbares Heizelement nach einem der Ansprüche 1 bis 6, **dadurch gekennzeichnet, dass** die Vorderseiten-Schicht (8) und die Rückseiten-Schicht (9) des Grundmaterials (7) aus mindestens zwei aufeinander liegenden Matten gebildet sind.

9. Verformbares Heizelement nach einem der Ansprüche 1 bis 7, **dadurch gekennzeichnet, dass** die Rückseiten-Schicht (9) des Grundmaterials (7) aus einem Gewirke gebildet ist.

10. Verformbares Heizelement nach einem der Ansprüche 1 bis 9, **dadurch gekennzeichnet, dass** die Stauchhärte von der Vorderseite zu der Rückseite des Grundmaterials (7) monoton ansteigend ist.

11. Verformbares Heizelement nach einem der Ansprüche 1 bis 9, **dadurch gekennzeichnet, dass** die Stauchhärte von der Vorderseite zu der Rückseite linear ansteigend ist.

12. Verformbares Heizelement nach einem der Ansprüche 1 bis 9, **dadurch gekennzeichnet, dass** die Stauchhärte von der Vorderseite zur Rückseite quadratisch ansteigend verläuft.

13. Verformbares Heizelement nach einem der Ansprüche 1 bis 12, **dadurch gekennzeichnet, dass** der Heizleiter aus Filamenten besteht, wobei die einzelnen Filamente mit jeweils mindestens einer Lackschicht überzogen sind.

14. Verformbares Heizelement nach einem der Ansprüche 1 bis 13, **dadurch gekennzeichnet, dass** auf die Vorderseiten-Schicht (8) ein Kleber aufgebracht ist.

## Claims

1. A deformable heating element, comprising at least one heating conductor (10) which is laid and fastened on a flat base material (7) at the one side thereof, called front-side layer (8), wherein the base material (7) is divided into a front-side layer (8) and a rear-side layer (9) which connects the front-side layer (8) on the side opposite the heat conductor (10), wherein the front-side layer (8) on which the heating conductor (10) is laid and fastened has a lower compression hardness and/or volume density than in the area of the opposite rear-side layer (9), **characterized in that** in comparison with the rear-side layer (9) the front-side layer (8) occupies a volume that is 50 to100% greater at the same volume weight.

2. The deformable heating element according to claim 1, **characterized in that** the whole base material (7) is made of one type of material.

3. The deformable heating element according to claim 1 or 2, **characterized in that** the base material (7) has a volume weight ranging from 50 to 200 kg/m³, preferably from 50 to 100 kg/m³.

4. The deformable heating element according to claim 1 or 2, **characterized in that** the base material (7) is made from a material layer having a basis weight of from 50 to 150 g/m² at a thickness of 1 to 2 mm.

5. The deformable heating element according to any one of claims 1 to 4, **characterized in that** the base material (7) is made from a needle punched nonwoven at least on the front-side layer (8).

6. The deformable heating element according to any one of claims 1 to 4, **characterized in that** the base material (7) is made from cellulose wadding at least on the front-side layer (8).

7. The deformable heating element according to any one of claims 1 to 4, **characterized in that** the base material (7) is made from a material with elastic fibers.

8. The deformable heating element according to any one of claims 1 to 6, **characterized in that** the front-side layer (8) and the rear-side layer (9) of the base material (7) are made from at least two superposed mats.

9. The deformable heating element according to any one of claims 1 to 7, **characterized in that** the rear-side layer (9) of the base material (7) is made from a knitted fabric.

10. The deformable heating element according to any one of claims 1 to 9, **characterized in that** the compression hardness is monotonically increasing from the front side to the rear side of the base material (7).

11. The deformable heating element according to any one of claims 1 to 9, **characterized in that** the compression hardness is linearly increasing from the front side to the rear side.

12. The deformable heating element according to any one of claims 1 to 9, **characterized in that** the compression hardness is quadratically increasing from the front side to the back side.

13. The deformable heating element according to any one of claims 1 to 12, **characterized in that** the heating conductor consists of filaments, the individual filaments being each coated with at least one coat of lacquer.

14. The deformable heating element according to any one of claims 1 to 13, **characterized in that** an adhesive is applied to the front-side layer (8).

## Revendications

1. Elément chauffant déformable avec au moins un conducteur chauffant (10), qui est disposé et fixé sur un matériau de base (7) plan sur un côté de celui-ci, appelé couche de côté avant (8), où le matériau de base (7) est subdivisé en une couche de côté avant (8) et une couche de côté arrière (9), qui fait suite à la couche de côté avant (8) sur le côté opposé au conducteur chauffant (10), où la couche de côté avant (8), sur laquelle le conducteur chauffant (10) est disposé et fixé, présente une dureté de compression et/ou une densité volumique plus faible que le domaine de la couche de côté arrière (9) **caractérisé en ce que** la couche de côté avant (8) présente un volume plus grand de 50 à 100 % que la couche de côté arrière (9) pour le même poids volumique.

2. Elément chauffant déformable selon la revendication 1, **caractérisé en ce que** l'ensemble du matériau de base (7) est formé à partir d'un type de matériau.

3. Elément chauffant déformable selon la revendication 1 ou 2, **caractérisé en ce que** le matériau de base (7) présente un poids volumique qui va de 50 à 200 kg/m³, de préférence de 50 à 100 kg/m³.

4. Elément chauffant déformable selon la revendication 1 ou 2, **caractérisé en ce que** le matériau de base (7) est formé à partir d'une couche de matériau qui présente un poids surfacique de 50 à 150 g/m² pour une épaisseur de 1 à 2 mm.

5. Elément chauffant déformable selon l'une des revendications 1 à 4, **caractérisé en ce que** le matériau de base (7) est formé à partir d'un non-tissé aiguilleté au moins sur la couche de côté avant (8).

6. Elément chauffant déformable selon l'une des revendications 1 à 4, **caractérisé en ce que** le matériau de base (7) est formé à partir d'ouate de cellulose au moins sur la couche de côté avant (8).

7. Elément chauffant déformable selon l'une des revendications 1 à 4, **caractérisé en ce que** le matériau de base (7) est formé à partir d'un matériau avec des fibres élastiques.

8. Elément chauffant déformable selon l'une des revendications 1 à 6, **caractérisé en ce que** la couche de côté avant (8) et la couche de côté arrière (9) du matériau de base (7) sont formées à partir d'au moins deux mats situés l'un sur l'autre.

9. Elément chauffant déformable selon l'une des revendications 1 à 7, **caractérisé en ce que** la couche de côté arrière (9) du matériau de base (7) est formée à partir d'un tissu à mailles.

10. Elément chauffant déformable selon l'une des revendications 1 à 9, **caractérisé en ce que** la dureté de compression est croissante de manière monotone du côté avant au côté arrière du matériau de base (7).

11. Elément chauffant déformable selon l'une des revendications 1 à 9, **caractérisé en ce que** la dureté de compression est croissante de manière linéaire du côté avant au côté arrière.

12. Elément chauffant déformable selon l'une des revendications 1 à 9, **caractérisé en ce que** la dureté de compression est croissante de manière quadratique du côté avant au côté arrière.

13. Elément chauffant déformable selon l'une des revendications 1 à 12, **caractérisé en ce que** le conducteur chauffant consiste en filaments, où les filaments individuels sont revêtus chacun d'au moins une couche de vernis.

14. Elément chauffant déformable selon l'une des revendications 1 à 13, **caractérisé en ce qu'**un adhésif est appliqué sur la couche de côté avant (8).
